# EUROPÄISCHE PATENTSCHRIFT

(11) **EP 0 908 656 B1**
(45) Veröffentlichungstag und Bekanntmachung des Hinweises auf die Patenterteilung: **09.10.2002**
(21) Anmeldenummer: 97114227.8
(22) Anmeldetag: 18.08.1997
(51) Int. Cl.: F16L 9/128

(54) **Rohrförmiges Formstück zur Definition eines Ventilsitzes**
Tubular article used as a valve seat
Objet tubulaire utilisé comme siège de soupape

(43) Veröffentlichungstag der Anmeldung: 14.04.1999
(73) Patentinhaber: Pfaudler Werke GmbH, 68723 Schwetzingen (DE)
(72) Erfinder: Schertz, Reinhart, 68723 Oftersheim (DE); Reinemuth, Jürgen, Dr.-Ing., 69469 Weinheim (DE); Weber, Stefan, 68804 Altlussheim (DE)
(74) Vertreter: Popp, Eugen, Dr.

(56) Entgegenhaltungen:
- FR-A- 962 395
- FR-A- 1 385 915
- GB-A- 1 397 432
- GB-A- 2 100 818
- DATABASE WPI Week 9009 Derwent Publications Ltd., London, GB; AN 90-061577 XP002052514 & JP 02 011 990 A (YG NITTA MOORE)
- DATABASE WPI Week 9706 Derwent Publications Ltd., London, GB; AN 97-063293 XP002052515 & JP 08 312 843 A (NIPPON PETROCHEMICALS)

## Beschreibung

Die Erfindung betrifft ein rohrförmiges Formstück aus glasfaserverstärktem Polytetrafluorethylen (PTFE) oder dergleichen Kunsstoffmaterial zur Plazierung innerhalb einer Öffnung im Boden eines Behälters, insbesondere innerhalb eines in der Bodenöffnung des Behälters angeordneten Reparaturstutzens, oder zur Plazierung innerhalb eines Rohrleitungssystems, und zur längsverschieblichen Aufnahme eines mit einem Axialantrieb einerseits und mit einem Ventilkörper andererseits verbundenen Ventilschaftes, wobei das eine, insbesondere nach der montagebehälter- bzw. rohrleitungsinnere Ende des Formstücks einen dem Ventilkörper zugeordneten Ventilsitz umfaßt.

Derartige Formstücke kommen als Teil emaillierter Ventile zum Einsatz, die innerhalb einer Öffnung im Boden eines Behälters, zum Beispiel innenseitig emaillierten Rührbehälters plazierbar sind. Solche Ventile werden auch bei Bedarf in Rohrleitungssysteme eingebaut, deren Innenflächen für den Transport hochagressiver Fluide emailliert sind

Bei der herkömmlicherweise relativ kurzen Bauweise der hier fraglichen Formstücke ist eine gesonderte Verstärkung derselben nicht erforderlich. Anders verhält es sich jedoch, wenn die Formstücke eine kritische Länge überschreiten. Dies ist zum Beispiel dann der Fall, wenn sie Teil eines Reparatursatzes sind. Die Formstücke der hier fraglichen Art bestehen in der Regel aus PTFE. Dieser Werkstoff wird bei einer Temperatur von etwa 100 bis 230 °C "teigig". Der Werkstoff beginnt zu fließen mit der Folge, daß seine mechanische Festigkeit entsprechend abnimmt.
In Längsrichtung verstärkte Rohre sind aus der FR-A-1 385 915 bekannt.

Der vorliegenden Erfindung liegt die Aufgabe zugrunde, ein Formstück der hier fraglichen Art zur Verfügung zu stellen, welches auch unter erhöhter Temperatur formstabil, produktbeständig und damit voll funktionsfähig bleibt, und zwar auch dann, wenn es überlang ausgebildet ist.

Diese Aufgabe wird erfindungsgemäß durch die kennzeichnenden Maßnahmen gemäß Anspruch 1 gelöst.

Der Kern der vorliegenden Erfindung liegt also darin, daß innerhalb der Wandung des rohrförmigen Formstücks Verstärkungseinlagen integriert sind, deren thermophysikalischen Eigenschaften etwa demjenigen des Formstücks entsprechen. Dies gilt insbesondere für den thermischen Ausdehnungskoeffizienten. Vorzugsweise bestehen die Verstärkungseinlagen aus Glas, Stahl, wärmebeständigem Kunststoff oder dergleichen. Bei Verwendung von Stahl bieten sich insbesondere Cr-Ni-Stähle oder Ni-Basislegierungen (Inconell®, Hastelloy®, oder dergleichen) an. Selbstverständlich muß das Material für die Verstärkungseinlagen auch bei erhöhter Temperatur formbeständig sein. Dies ist im vorliegenden Fall das Hauptkriterium für das Material der Verstärkungseinlagen.

Vorzugsweise sind die Verstärkungseinlagen in Form von Rundstäben, insbesondere Glasstäben gebildet. Diese werden in entsprechende Axialbohrungen eingesteckt, die in der Wandung des rohrförmigen Formstücks ausgebildet sind. Verwendet man statt Glas Stahlstäbe, muß darauf geachtet werden, daß diese nicht mit dem in der Regel agressiven Medium in Kontakt kommen, welches sich innerhalb des zugeordneten Behälters oder Rohrleitungssystems befindet. Zu diesem Zweck sind die Einstecköffnungen für die Verstärkungseinlagen entweder individuell oder durch einen gemeinsamen Schließring fluiddicht verschließbar. Eine besondere Ausführungsform dafür ist in Anspruch 5 beschrieben.

Gemäß den Ansprüchen 6 ff ist an dem dem Ventilsitz gegenüberliegenden Ende des rohrförmigen Formstücks ein radial nach außen vorspringender Ringflansch angeformt, über den eine fluiddichte Montage des Formstücks erfolgt. Der Ringflansch weist vorzugsweise Verstärkungseinlagen, insbesondere aus Graphit oder dergleichen Material auf. Diese Verstärkungseinlagen erstrecken sich bei einer vorteilhaften Ausführungsform jeweils knapp unterhalb den beiden Flachseiten des Ringflansches und über dessen Umfang. Diese Verstärkungseinlagen definieren flansch-integrierte Ringdichtungen, so daß gesonderte Dichtringe bei der Montage entbehrlich sind.

Nachstehend wird eine Ausführungsform eines erfindungsgemäß ausgebildeten Formstücks sowie die Montage desselben innerhalb eines Reparaturstutzens im Bodenbereich eines Chemiebehälters anhand der beigefügten Zeichnung näher erläutert. Es zeigen:
- Fig. 1: einen Reparatursatz für eine Ventilanordnung in der Bodenöffnung eines innenseitig emaillierten Behälters samt erfindungsgemäßem Formstück im Längsschnitt;
- Fig. 2: das im Rahmen des Reparatursatzes gemäß Fig. 1 verwendete Formstück im Längsschnitt; und
- Fig. 3: das Formstück gemäß Fig. 1 in Halb-Ansicht in Richtung des Pfeiles III-III in Fig. 2.

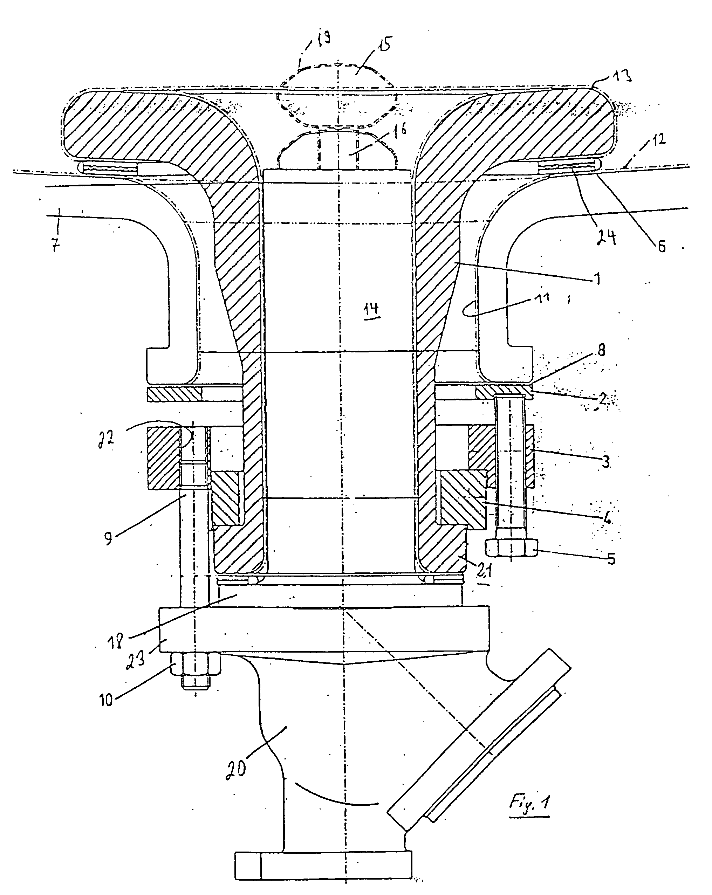

In Fig. 1 ist ein Reparatursatz für die Bodenöffnung eines Chemiebehälters samt zugeordnetem Auslaßventil im schematischen Längsschnitt dargestellt. Der Boden des Behälters ist mit der Bezugsziffer 7 gekennzeichnet. Die im Behälterboden 7 vorgesehene Öffnung umfaßt einen Auslaßstutzen 11. Innenseitig ist der Behälter und Auslaßstutzen 11 mit einer Emailschicht 12 versehen.

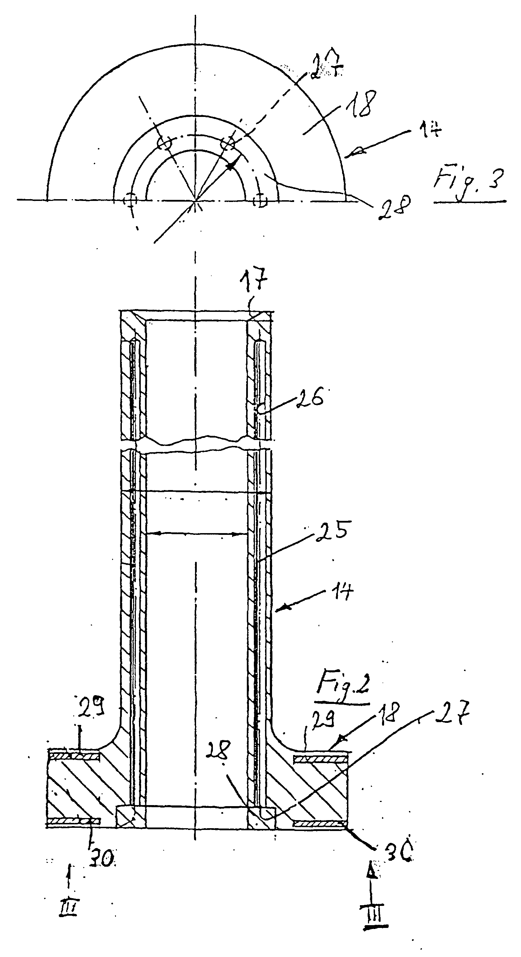

Im Rahmen einer Reparatur wird in den Auslaßstutzen 11 vom Behälterinneren her ein Reparaturstutzen 1 eingesetzt. Gegenüber dem Behälterboden 7 stützt sich der Reparaturstutzen 1 über einen Dichtring 6 ab. Die mit dem Behältermedium in Kontakt kommende Fläche des Reparaturstutzens 1 ist ebenfalls emailliert (Emailschicht 13). Von außen her ist in den Reparaturstutzen 1 ein rohrförmiges Formstück aus glasfaserverstärktem PTFE eingesetzt. Dieses dient zur längsverschieblichen Aufnahme eines mit einem nicht dargestellten Axialantrieb einerseits und mit einem Ventilkörper 15 andererseits verbundenen Ventilschaftes 16, wobei das behälterinnere Ende des Formstücks 14 einen dem Ventilkörper 15 zugeordneten Ventilsitz 17 (siehe Fig. 2) umfaßt. Das äußere, in Fig. 1 untere Ende des rohrförmigen Formstücks 14 ist mit einem radial nach außen vorspringenden Ringflansch 18 versehen, über den die Fixierung des Formstücks 14 innerhalb des Reparaturstutzens 1 erfolgt. Sowohl der Ventilkörper als auch der Ventilschaft ist mit einer Emailschicht 19 versehen. Der Ringflansch 18 des Formstücks 14 ist zwischen einem Rohranschluß 20 und der behälteräußeren, hier unteren Stirnseite des Reparaturstutzens 1 festgespannt. Die behälteräußere Stirnseite des Reparaturstutzens 1 ist Teil eines sich radial nach außen erstreckenden Ringflansches 21. An der dem Behälterboden 7 zugewandten Seite des Ringflansches 21 liegt ein Druckring 4 an. Dieser wird durch einen Spannring 3 gegen den Ringflansch 21 des Behälterstutzens 1 gedrückt, und zwar mittels über den Umfang verteilt angeordnete Spannbolzen 9 und Spannmuttern 10. Die Spannbolzen 9 sind in Gewindebohrungen 22 des Spannrings 3 eingeschraubt. Mit ihrem gegenüberliegenden Ende erstrecken sie sich durch korrespondierende Bohrungen am Rohranschluß 20 bzw. an einem dort ausgebildetem Flansch 23 hindurch. Die Festlegung des Rohranschlusses 20 und damit auch des Formstücks 14 erfolgt durch auf die Spannbolzen 9 aufschraubbare Spannmuttern 10.

Die Festlegung des Reparaturstutzens 1 innerhalb des Auslaßstutzens 11 erfolgt durch Spannschrauben 5, die durch den Spannring 3 hindurchgeschraubt werden unter Anlage an die untere Stirnseite des Auslaßstutzens 11, und. zwar unter Zwischenschaltung eines Stützrings 2. Es sind wenigstens drei gleichmäßig über den Umfang verteilt angeordnete Spannschrauben 5 vorgesehen.

Bei dem Dichtring 6 handelt es sich um ein bekanntes Bauteil, welches einen Wellring 24 umfaßt. Die entsprechende Dichtung wird von der Anmelderin hergestellt und unter dem Namen "Pfaudler AF 2000" vertrieben.

Mit der Bezugsziffer 8 ist die behälteräußere bzw. in Fig. 1 untere Stirnseite des Auslaßstutzens 11 gekennzeichnet.

Des weiteren sei darauf hingewiesen, daß in Fig. 1 der Ventilkörper in der oberen Offenstellung und in der unteren Schließstellung dargestellt ist.

Fig. 2 zeigt das rohrförmige Formstück 14 im Längsschnitt. Daraus ist zu erkennen, daß innerhalb der Wandung des Formstücks 14 mehrere, insbesondere wenigstens drei gleichförmig über den Umfang verteilt angeordnete und sich in Rohrlängsrichtung erstreckende Verstärkungseinlagen, hier Glasstäbe 25 vorgesehen sind. Die Glasstäbe 25 sind innerhalb korrespondierender Axialbohrungen 26 plazierbar. Sie lassen sich in diese Bohrungen durch Einstecköffnungen 27 einführen, die an der dem Ventilsitz 17 gegenüberliegenden Stirnseite des Formstücks 14 angeordnet sind. Nach Montage der Glasstäbe 25 werden die Einstecköffnungen 27 durch einen gemeinsamen Schließring 28 nach außen hin abgedichtet. Konkret sind die Einstecköffnungen 27 innerhalb einer ringförmigen Vertiefung an der dem Ventilsitz 17 gegenüberliegenden Stirnseite des Formstücks 14 ausgebildet, in die nach Montage der Verstärkungseinlagen, hier Glasstäbe 25 der Schließring 28 unter Ausbildung einer Fluiddichtung einpreßbar ist, und zwar so, daß er mit der dem Ventilsitz 17 gegenüberliegenden Stirnseite des Formstücks 14 bündig abschließt. Der dem Formstück 14 zugeordnete Ringflansch 18 weist ringscheibenförmige Verstärkungseinlagen 29, 30 auf, und zwar vorzugsweise aus Graphit. Diese Verstärkungseinlagen 29, 30 erstrecken sich jeweils knapp unterhalb den beiden Flachseiten des Ringflansches 18 und uber dessen Umfang. Diese Konstruktion ersetzt gesonderte Ringflansch-Dichtungen, d. h. Ringdichtungen zwischen dem Ringflansch 18 und dem Behälterstutzen 1 einerseits sowie dem Ringflansch 18 und dem Rohranschluß 20 andererseits.

Statt der erwähnten Glasstäbe 25 ist es auch denkbar, Metallstäbe oder Stäbe aus auch bei hohen Temperaturen formbeständigem Kunststoff zu verwenden. Werden Metallstäbe eingesetzt, sollten diese aus einem produktverträglichen Werkstoff, wie Cr-Ni-Legierungen bestehen. Auf jeden Fall ist es dann von großer Bedeutung, daß die Einstecköffnungen 27 fluiddicht verschlossen sind, z. B. mittels des bereits erwähnten Schließringes 28.

Wesentlich ist bei vorliegender Erfindung, daß die Verstärkungseinlagen länglich ausgebildet sind und sich im wesentlichen über die gesamte Länge des rohrförmigen Formstücks 14 erstrecken. Die Aufnahmeöffnungen für die Verstärkungseinlagen, z. B. Glasstäbe, werden nach der Fertigung des Formstücks hergestellt, z. B. mittels geeigneter Bohrwerkzeuge. Grundsätzlich wäre es auch denkbar, die Verstärkungseinlagen bei der Herstellung, d. h. beim Formguß der Formstücke 14 zu integrieren.

Sämtliche in den Anmeldungsunterlagen offenbarten Merkmale werden als erfindungswesentlich beansprucht, soweit sie einzeln oder in Kombination gegenüber dem Stand der Technik neu sind.

### Bezugszeichenliste

- 1: Reparaturstutzen
- 2: Stützring
- 3: Spannring
- 4: Druckring
- 5: Spannschraube
- 6: Dichtring
- 7: Behälterboden
- 8: Stirnseite
- 9: Spannbolzen
- 10: Spannmutter
- 11: Auslaßstutzen
- 12: Emailschicht
- 13: Emailschicht
- 14: Formstück
- 15: Ventilkörper
- 16: Ventilschaft
- 17: Ventilsitz
- 18: Ringflansch
- 19: Emailschicht
- 20: Rohranschluß
- 21: Ringflansch
- 22: Gewindebohrung
- 23: Flansch
- 24: Wellring
- 25: Verstärkungseinlage (Glasstab)
- 26: Axialbohrung
- 27: Einstecköffnung
- 28: Schließring
- 29: Verstärkungseinlage
- 30: Verstärkungseinlage

## Patentansprüche

1. Rohrförmiges Formstück aus glasfaserverstärktem Polytetrafluorethylen oder dergleichen Kunststoffmaterial zur Plazierung innerhalb einer Öffnung im Boden (7) eines Behälters, insbesondere innerhalb eines in der Bodenöffnung des Behälters angeordneten Reparaturstutzens (1), oder zur Plazierung innerhalb eines Rohrleitungssystems, und zur längsverschieblichen Aufnahme eines mit einem Axialantrieb einerseits und mit einem Ventilkörper (15) andererseits verbundenen Ventilschaftes (16), wobei das eine, insbesondere nach der montagebehälter- bzw. rohrleitungsinnere Ende des Formstücks (14) einen dem Ventilkörper (15) zugeordneten Ventilsitz (17) umfaßt,
**gekennzeichnet durch**
mehrere innerhalb der Wandung des rohrförmigen Formstücks (14) über dessen Umfang etwa gleichförmig verteilt angeordnete und sich in Rohrlängsrichtung erstreckende Verstärkungseinlagen (25) aus Glas, Stahl, oder auch bei erhöhter Temperatur formbeständigem Kunststoffmaterial.

2. Formstück nach Anspruch 1,
**dadurch gekennzeichnet, daß**
die Verstärkungseinlagen in Form von Rundstäben (25) ausgebildet sind.

3. Formstück nach Anspruch 1 oder 2,
**dadurch gekennzeichnet, daß**
die Verstärkungseinlagen (25) in zugeordnete Axialbohrungen (26) einsteckbar sind.

4. Formstück nach Anspruch 3,
**dadurch gekennzeichnet, daß**
die Einstecköffnungen (27) für die Verstärkungseinlagen (25) verschließbar, insbesondere durch einen gemeinsamen Schließring (28) abdichtbar sind.

5. Formstück nach Anspruch 4,
**dadurch gekennzeichnet, daß**
die Einstecköffnungen (27) für die Verstärkungseinlagen (25) an der dem Ventilsitz (17) gegenüberliegenden Stirnseite des rohrförmigen Formstücks (14) ausgebildet sind, insbesondere innerhalb einer ringförmigen Vertiefung, in die nach Montage der Verstärkungseinlagen (25) der Schließring (28) unter Abdichtung der Einstecköffnungen (27) einpreßbar ist.

6. Formstück nach einem der Ansprüche 1 bis 5,
**dadurch gekennzeichnet, daß**
an dem dem Ventilsitz (17) gegenüberliegenden Ende ein radial nach außen vorspringender Ringflansch (18) ausgebildet ist, über den die fluiddichte Montage des Formstücks (14) erfolgt.

7. Formstück nach Anspruch 6,
**dadurch gekennzeichnet, daß**
der Ringflansch (18) Verstärkungseinlagen (29, 30), insbesondere Graphiteinlagen, umfaßt.

8. Formstück nach Anspruch 7,
**dadurch gekennzeichnet, daß**
sich die Verstärkungseinlagen (29, 30) jeweils ringscheibenförmig ausgebildet und sich knapp unterhalb den beiden Flachseiten des Ringflansches (18) und über dessen Umfang erstrecken.

## Claims

1. A tubular shaped part made of a glass-fiber enforced polytetrafluor ethylene or a similar plastic material, intended for being placed within the opening in the bottom (7) of a receptacle, in particular within a connecting piece (1) serving for repair purposes arranged in the bottom opening of the receptacle, or for being placed within a pipe system, and intended for the longitudinally displaceable reception of a valve stem (16) connected, for one, with an axial drive and, for another, with a valve body (15), the one end of the shaped part (14), in particular that end oriented towards the inner receptacle and/or the inner pipe, comprising a valve seat (17) allocated to said valve body (15),
**characterized by**
plural reinforcement inserts (25) of glass, steel or a plastic material dimensionally stable even at increased temperature, extending in the longitudinal pipe direction within the wall of the tubular shaped part (14), and being arranged approximately uniform across the circumference thereof.

2. Shaped part according to claim 1,
**characterized in that**
said reinforcement inserts are configured in the form of round rods (25).

3. Shaped part according to claim 1 or 2,
**characterized in that**
said reinforcement inserts (25) are insertable into allocated axial bores (26).

4. Shaped part according to claim 3,
**characterized in that**
the insertion opening (27) for the reinforcement inserts (25) may be obturated, in particular sealed by a common locking ring (28).

5. Shaped part according to claim 4,
**characterized in that**
the insertion openings (27) for the reinforcement inserts (25) are formed on the front face of the tubular shaped part (14) opposite the valve seat (17), in particular within an annular depression, into which, after mounting the reinforcement inserts (25), the locking ring (28) may be pressed in while sealing the insertion openings (27).

6. Shaped part according to claims 1 through 5,
**characterized in that**
on the end opposite the valve seat (17), a ring flange (18) radially protruding outwards is formed, via which ensues the fluid-tight mounting of the shaped part (14).

7. Shaped part according to claim 6,
**characterized in that**
said ring flange (18) comprises reinforcement inserts (29, 30), in particular graphite inserts.

8. Shaped part according to claim 7,
**characterized in that**
said reinforcement inserts (29, 30) each are configured in the form of a ring segment and extend closely below the two flat sides of the ring flange (18) and across the circumference thereof.

## Revendications

1. Pièce formée en forme de tube en polytétrafluoroéthylène renforcé en fibre de verre ou en un matériau synthétique similaire pour être placée en une ouverture dans le fond (7) d'un récipient, en particulier dans un support de réparation (1) disposé dans une ouverture dans le fond du récipient, ou pour être placée dans un système de canalisation de tuyaux, et pour recevoir de manière translatable dans le sens de la longueur une queue de soupape (16) reliée d'une part avec un entraînement axial et d'autre part avec un corps de soupape, où une extrémité de la pièce formée (14), orientée en particulier vers l'intérieur du récipient de montage, respectivement de la canalisation de tuyaux, comprend un siège de soupape (17) affecté au corps de soupape (15),
**caractérisée par**
plusieurs éléments rapportés de renforcement (25) en verre, en acier ou encore en une matière synthétique conservant sa forme même à haute température, à l'intérieur de la paroi de la pièce formée en forme de tube (14), répartis de manière sensiblement uniforme sur son périmètre et s'étendant dans la direction de la longueur du tube.

2. Pièce formée selon la revendication 1,
**caractérisée en ce que** les éléments rapportés de renforcement sont formés en tant que baguettes rondes (25).

3. Pièce formée selon la revendication 1 ou 2,
**caractérisée en ce que** les éléments rapportés de renforcement (25) sont enfichables dans des perçages axiaux (26) affectés.

4. Pièce formée selon la revendication 3,
**caractérisée en ce que** les ouvertures d'enfichage (27) pour les éléments rapportés de renforcement (25) sont obturables, en particulier peuvent s'étanchéiser par un anneau de fermeture (28) commun.

5. Pièce formée selon la revendication 4,
**caractérisée en ce que** les ouvertures d'enfichage (27) pour les éléments rapportés de renforcement (25) sont formées en la face frontale de la pièce formée en forme de tube (14) située en face du siège de soupape (17), en particulier dans un creux en forme d'anneau, dans lequel, après montage des éléments rapportés de renforcement (25), l'anneau de fermeture (28) peut pénétrer par pressage en étanchéisant les ouvertures d'enfichage (27).

6. Pièce formée selon l'une des revendications 1 à 5,
**caractérisée en ce qu**'à l'extrémité située en face du siège de soupape (17), une flasque en anneau (18) dépassant radialement vers l'extérieur est formée, par laquelle le montage étanche aux fluides de la pièce formée (14) se réalise.

7. Pièce formée selon la revendication 6,
**caractérisée en ce que** la flasque en anneau (18) comprend des éléments rapportés de renforcement (29, 30), en particulier des éléments rapportés en graphite.

8. Pièce formée selon la revendication 7,
**caractérisée en ce que** les éléments rapportés de renforcement (29, 30) sont formés en forme de plaques en anneau et s'étendent à peine en dessous des deux côtés plats de la flasque en anneau (18) et à travers son périmètre.
